**Europäisches Patentamt**

**European Patent Office**

**Office européen des brevets**

(11) Veröffentlichungsnummer: **0 187 941**
**B1**

(19)

---

(12) **EUROPÄISCHE PATENTSCHRIFT**

---

(45) Veröffentlichungstag der Patentschrift:
**16.03.88**

(21) Anmeldenummer: **85115426.0**

(22) Anmeldetag: **05.12.85**

(51) Int. Cl.⁴: **F 02 M 65/00,** G 01 F 25/00

---

(54) **Einrichtung zum Kalibrieren von Einspritzpumpen.**

---

(30) Priorität: **04.01.85 DE 3500138**

(43) Veröffentlichungstag der Anmeldung:
**23.07.86 Patentblatt 86/30**

(45) Bekanntmachung des Hinweises auf die Patenterteilung:
**16.03.88 Patentblatt 88/11**

(84) Benannte Vertragsstaaten:
**DE FR GB IT**

(56) Entgegenhaltungen:
**AT-B-213 664**
**DE-A-3 007 482**
**GB-A-2 052 073**

(73) Patentinhaber: **ROBERT BOSCH GMBH, Postfach 50, D-7000 Stuttgart 1 (DE)**

(72) Erfinder: **Leyendecker, Ralf, Dipl.- Ing., Gaussstrasse 38A, D-7000 Stuttgart 1 (DE)**

EP 0 187 941 B1

## Beschreibung

### Stand der Technik

Die Erfindung geht aus von einer Einrichtung zum Kalibrieren von Einspritzpumpen nach der Gattung des Hauptanspruchs. Bei dieser bekannten Einrichtung wird die aus den beiden Einspritzdüsen austretende Prüfflüssigkeit in Meßgläser geleitet und dort mit dem Flüssigkeitsstand an entsprechendenden Markierungen verglichen. Es handelt sich bei dieser Art von Messung nicht um eine Absolut-, sondern um eine Relativmessung (AT-B-213 664). Eine derartige Einrichtung ist im Prinzip einfach im Aufbau, jedoch dürfte die Ablesegenauigkeit noch nicht optimal sein, und außerdem ist die Handhabung und Durchführung der Auswertung etwas umständlich.

### Vorteile der Erfindung

Die erfindungsgemäße Einrichtung mit den kennzeichnenden Merkmalen des unabhängigen Anspruchs 1 hat demgegenüber den Vorteil, daß sie ebenfalls relativ einfach ist und dabei ein sehr hohes Maß an Meßgenauigkeit gewährleistet, indem sie teilweise oder schon vollständig automatisiert ist. Dadurch werden subjektive Einflüsse beim Auswerten des Meßergebnisses eliminiert.

Durch die in den Unteransprüchen aufgeführten Maßnahmen sind vorteilhafte Weiterbildungen und Verbesserungen der im Hauptanspruch angegebenen Einrichtung möglich.

### Zeichnung

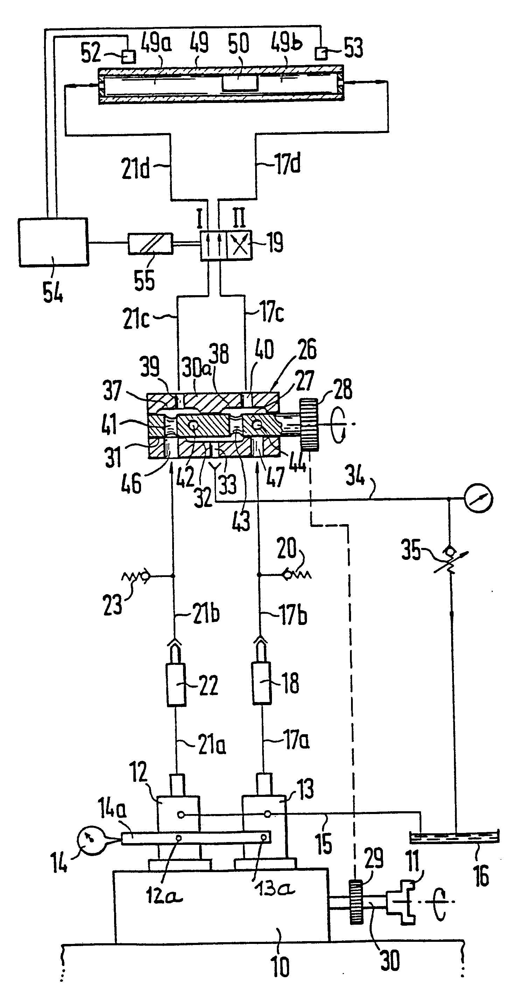

Ein Ausführungsbeispiel der Erfindung ist in der Zeichnung dargestellt und in der nachfolgenden Beschreibung näher erläutert. Die Zeichnung zeigt in schematischer Darstellung eine Einrichtung zum Kalibrieren von Einspritzpumpen.

### Beschreibung des Ausführungsbeispiels

In der Zeichnung ist mit 10 ein Getriebekasten bezeichnet, in dem ein Getriebe angeordnet ist, das über eine Kupplung 11 von einer nicht weiter dargestellten Antriebsmaschine angetrieben ist. Über das Getriebe werden zwei Einspritzpumpen 12, 13 mit genau derselben Drehzahl angetrieben. Sie arbeiten jedoch alternierend, und zwar um 180° der Welle 30 des Getriebes 10 versetzt. Dadurch erfolgt bei jeder Umdrehung der Welle 30 pro Einspritzpumpe ein Arbeitshub. Die beiden Arbeitshübe sind gegeneinander um 180° bezüglich der Welle 30 versetzt. Bei der Einspritzpumpe 12 handelt es sich um eine kalibrierte Pumpe, von der man genau die Fördermenge bei einer bestimmten Drehzahl kennt. Bei der Einspritzpumpe 13 handelt es sich um die zu prüfende Pumpe. An die beiden Einspritzpumpen ist eine Meßuhr 14 zur Erfassung der Position der Regelstangen der Einspritzpumpen angeschlossen. Die beiden Anlenkpunkte 12a, 13a der Einspritzpumpe 12, 13 sind miteinander über ein Gestänge 14a verbunden, so daß für beide Einspritzpumpen dieselbe Regelstangenposition vorgegeben ist. Den beiden Einspritzpumpen wird über eine nicht dargestellte Förderpumpe über die Leitung 15 Prüfflüssigkeit aus einem Behälter 16 zugeführt.

Die Einspritzpumpe 13 fördert die Prüfflüssigkeit über eine Leitung 17a zu einer Einspritzdüse 18 und von dort über eine Leitung 17b zu einem Drehschieberventil 26, dessen Drehschieber 27 über ein Zahnradgetriebe 28, 29 von der Welle 30 des Getriebes mit der halben Drehzahl angetrieben wird, wie die Einspritzpumpen 12, 13. Der Drehschieber 27 ist in einer Längsbohrung 31 des Gehäuses 30a des Drehschieberventils 26 gelagert. An der Längsbohrung 31 ist auf der einen Seite eine Längsnut 32 ausgebildet, von der eine Bohrung 33 nach außen verläuft, an die eine zum Behälter 16 führende Leitung 34 angeschlossen ist. In der Leitung 34 ist ein geringfügig vorgespanntes Rückschlagventil 35 angeordnet, das sich in Richtung vom Drehschieberventil 26 zum Behälter 16 zu öffnen vermag. An der Längsbohrung 31 sind außerdem der Längsnut 32 gegenüberliegend zwei Längsnuten 37, 38 ausgebildet, deren einander zugewandte Planken sich so weit nähern, daß sie - nur geometrisch gesehen - in den Bereich der Längsnut 32 gelangen. In die Längsnut 37 dringt von außen eine Bohrung 39 ein, in die Längsnut 38 eine ebensolche Bohrung 40. Im Drehschieber sind vier durchgehende Querbohrungen 41 bis 44 ausgebildet, von denen die Bohrung 41 und die übernächste Bohrung 43 parallel zueinander verlaufen, während die auf die Querbohrung 41 folgende Querbohrungen 42 und die letzte Querbohrung 44 rechtwinklig zu den andere, verlaufen, aber ebenfalls parallel zueinander. Die Querbohrungen 41, 42 können mit den Längsnuten 37 und 32 in Verbindung gebracht werden, die Querbohrungen 43 und 44 mit den Längsnuten 38 und ebenfalls 32. Die beiden einander benachbarten Querbohrungen 42, 43 liegen im Bereich der Längsnut 32, während die außenliegenden Bohrungen 41, 44 mit im Gehäuse 30a ausgebildeten Bohrungen 46, 47 in Verbindung gebracht werden können, in welche die Leitungen 21b bzw. 17b münden. An die Leitung 17b ist ein Druckbegrenzungsventil 20 angeschlossen, Auch die Pumpe 12 fördert die Prüfflüssigkeit über eine Leitung 21a und eine Einspritzdüse 22 sowie eine Leitung 21b zum Drehschieberventil 26. An die Leitung 21b ist ebenfalls ein Druckbegrenzungsventil 23 angeschlossen.

Von den Bohrungen 39, 40 führen Leitungen 17c, 21c zu einem 4/2-Wegeventil 19, von wo eine Leitung 17d zum einen Ende eines als Meßzylinder dienenden Glasrohres 49 führt, in dem ein loser Kolben 50 gleitend geführt ist. Vom anderen Ende des Glasrohrs führt eine Leitung 21d zum Wegeventil 19. An beiden Enden des Glasrohrs befindet sich außen je ein Sensor 52, 53, von denen nicht weiter bezeichnete elektrische Leitungen zu einer Elektronik 54 führen, die einen Elektromagnet 55 für die Verstellung des Wegeventils 19 ansteuert. Die Sensoren 52, 53 melden dann, wenn der Kolben 50 an einem der Enden des Glasrohrs angekommen ist, die Kolbenstellung der Elektronik 54. In der Stellung II des Wegeventils 19 sind die Leitungen 17d, 21d über Kreuz mit den Leitungen 17c, 21c verbunden.

Der Drehschieber 26 ist über das Getriebe 28, 29 so mit der Welle 30 synchronisiert, daß bereits kurz vor dem Förderbeginn der Einspritzpumpe 12 die Querbohrung 41 im Drehschieber 26 eine Verbindung zwischen den Bohrungen 46 und 39 hergestellt hat. Die Querschnitte der Bohrungen und Längsnuten im Drehschieber sind so bemessen, daß die Verbindung erst dann unterbrochen wird, wenn die Einspritzpumpe die Förderung einer Einspritzmenge abgeschlossen hat. Entsprechendes gilt für die Einspritzpumpe 13 und für die Bohrungen 47, 44 und 40, jedoch um 90 Winkelgrade des Drehschiebers versetzt.

Es sei angenommen, das 4/2-Wegeventil befinde sich in Stellung I. Dann bewirkt ein von der Einspritzdüse 22 injiziertes Volumen eine entsprechende Verschiebung der Prüfflüssigkeitssäule in 21b, 46, 41, 37, 39, 21c, 21d und dem Raum 49a. Im Meßzylinder 49 teilt sich die Verschiebung dem Kolben 50 mit, der dem Einspritzvolumen entsprechend ein kleines Stück nach rechts rückt. Die Verschiebung der weiter folgenden Flüssigkeitssäule erfolgt über 17d, 17c, 40, 43, 32, 33, 34 und wird nach dem Druckbegrenzungsventil 35 in den Behälter 16 geleitet.

Nachdem infolge der Weiterdrehung der Welle 30 die Einspritzung der Einspritzpumpe 12 beendet ist, beginnt die Pumpe 13 mit der Einspritzung. Das von ihr geförderte Einspritzvolumen bewirkt nach Austritt aus der Einspritzdüse 18 eine Verschiebung der Flüssigkeitssäule in 17b, 47, 44, 38, 40, 17c, 17d und dem Raum 49b. Im Meßzylinder 49 teilt sich die Verschiebung dem Kolben 50 mit, der nun ein dem neuen Einspritzvolumen entsprechendes Stück nach links rückt. Die Verschiebung der weiteren Flüssigkeitssäule erfolgt über 49a, 21d, 21c, 37, 42, 32, 33, 34 und endet ebenfalls nach dem Druckbegrenzungsventil 35 im Behälter 16.

Nimmt man an, daß die Einspritzpumpen 12, 13 alternierend jeweils dieselbe Einspritzmenge fördern, führt der Kolben 50 lediglich kurze hin- und hergehende Bewegung aus, wobei die Frequenz dieser oszillierenden Bewegung von der Antriebsdrehzahl der Welle 30 abhängt. Fördert jedoch beispielsweise die Einspritzpumpe 13 in jedem Förderhub ein auch nur geringfügig höheres Volumen, ist die nach links gehende Oszillation des Kolbens stets ein wenig größer als die nach rechts gehende, so daß optisch gesehen der Kolben allmählich nach links driftet. Die Geschwindigkeit dieser Drift hängt dabei ausschließlich vom wirksamen Kolbenquerschnitt und von der Differenz der Einspritzvolumina ab, die von den beiden Einspritzpumpen geliefert verden.

Ist die Einspritzmenge der Pumpe 13 jedoch stets etwas kleiner als die der Pumpe 12, wird der Kolben eine entsprechende Drift nach rechts ausführen.

Die Kalibrierung der Einspritzpumpe 13 erfolgt, indem sie so lange justiert wird, bis der Kolben 50 nicht mehr driftet. Es ist dabei unerheblich, an welcher Stelle der Kolben im Meßglas eine nichtdriftende Oszillation ausführt.

Wenn der Kolben wegen einer Driftbewegung das linke oder rechte Ende des Meßrohres erreicht, wird dies dem Steuergerät 54 vom Sensor 52 oder 53 gemeldet. Das Steuergerät bewirkt dann ein Umschalten des Wegeventils 19, wodurch die Richtung der Kolbendrift umgekehrt wird.

Meist ist es erforderlich, für die Kalibrierung von Einspritzpumpen Toleranzen vorzugeben. Die Erfindung erlaubt die absolute Messung der Abweichung zwischen den beiden Einspritzpumpen 12, 13, indem die Zeit gemessen wird, in der der Kolben 50 von einem Sensor zum anderen driftet. Aus der gemessenen Zeit, dem bekannten Querschnitt und der Länge der Meßstrecke sowie der Drehzahl der Welle 30 kann die Abweichung in mm3/Hub errechnet werden.

Nach dem Justieren der Einspritzpumpe wird diese entfernt, und es wird ein neuer Prüfling montiert. Anstelle des Kolbens 50 können im Meßzylinder 49 auch Luftblasen als optische Indikatoren verwendet sein.

Die erfindungsgemäße Prüfeinrichtung hat den Vorteil, daß eine Reihe von Prüfbedingungen, die bei einer Absolutmessung in engen Grenzen gehalten werden mussen, in der erfindungsgemäßen Vergleichsmessung keinen oder nur einen untergeordneten Einfluß haben. Hierzu gehören insbesondere Konstanz der Antriebsdrehzahl, absoluter Betrag der Antriebsdrehzahl, Gleichlaufschwankungen, Viskosität und Temperatur des Prüföls, saugseitiger Zulaufdruck zu den Einspritzpumpen, Beharrungstemperaturen von Pumpen, Einspritzdüsen, Leitungen etc.

**Patentansprüche**

1. Einrichtung zum Kalibrieren von Einspritzpumpen, wobei die zu prüfende Einspritzpumpe über eine Einspritzdüse Prüfflüssigkeit zu einem Prüfgerät (49) fördert und synchron zur zu prüfenden Einspritzpumpe (13) eine kalibrierte Einspritzpumpe (12) angetrieben ist, die ebenfalls Prüfflüssigkeit über eine Einspritzdüse zum Prüfgerät fördert, dadurch gekennzeichnet, daß zwischen den Einspritzdüsen (18, 22) und dem Prüfgerät (49) ein Drehschieberventil (28) angeordnet ist, das mit einem Bruchteil der Drehzahl der beiden Einspritzpumpen rotiert und über welches abwechslungsweise die Prüfflüssigkeit über zwei Pfade (17c, 17d; 21c, 21d) jeweils zu entgegensetzten Seiten des als Meßzylinder ausgebildeten Prüfgeräts (49) führt, in dem ein von den beiden Prüfflüssigkeitsströmen beaufschlagter und verschiebbarer Kolben (50) angeordnet ist.

2. Einrichtung nach Anspruch 1, dadurch gekennzeichnet, daß der Drehschieber (27) des Drehschieberventils mit der halben Drehzahl der Einspritzpumpen rotiert.

3. Einrichtung nach Anspruch 1 oder 2, dadurch gekennzeichnet, daß an jedem Ende des Meßzylinders ein Sensor (52, 53) angeordnet ist, der die Position des Kolbens (50) erfaßt und an eine Elektronik (54) meldet, die ein Steuerventil (19) steuert, über das die Flußrichtung der Prüfflüssigkeit von dem Drehschieberventil (26) zum Meßzylinder (49) umkehrbar ist.

4. Einrichtung nach einem der Ansprüche 1 bis 3, dadurch gekennzeichnet, daß das Drehschieberventil derart ausgebildet ist, daß in einer bestimmten Position Prüfflüssigkeit nur zu einer Seite des Glasrohrs strömt, während von der anderen Seite eine entsprechende Menge über das Drehschieberventil zum Tank abfließt, und daß in der nächsten, um beispielsweise 90° weiter verdrehten Position des Drehschiebers die Flüssigkeit in der entgegengesetzten Richtung fließt.

5. Einrichtung nach Anspruch 4, dadurch gekennzeichnet, daß im Drehschieber (27) abwechslungsweise zwei zueinander parallel verlaufende Bohrungen (41, 43) und zwei um 90° zu diesen versetzte, ebenfalls parallel verlaufende Bohrungen (42, 44) ausgebildet sind, über welche der Flüssigkeitspfad zum Meßzylinder (49) führt.

6. Einrichtung nach einem der Ansprüche 1 bis 5, dadurch gekennzeichnet, daß der Meßzylinder aus Glas oder aus transparentem Kunststoff besteht.

7. Einrichtung nach einem der Ansprüche 1 bis 6, dadurch gekennzeichnet, daß im Meßzylinder (49) Luftblasen als optische Indikatoren verwendet sind.

## Claims

1. Device for calibrating injection pumps, the injection pump to be tested supplying test fluid via an injection nozzle to a test device (49) and a calibrated injection pump (12) being driven synchronously with the injection pump (13) to be tested, which calibrated injection pump (12) also supplies test fluid via an injection nozzle to the test device, characterized in that a rotary slide valve (26) is located between the injection nozzle (18, 22) and the test device (49), which rotary slide valve (26) rotates with a fraction of the rotational speed of the two injection pumps and via which the test fluid leads alternately via two routes (17c, 17d; 21c, 21d) to opposite sides, in each case, of the test device (49) embodied as a measuring cylinder, in which is located a displaceable piston (50) which is subjected to the two test fluid flows.

2. Device according to Claim 1, characterized in that the rotary slide (27) of the rotary slide valve rotates with half the rotational speed of the injection pumps.

3. Device according to Claim 1 or 2, characterized in that a sensor (52, 53) is located at each end of the measuring cylinder, which sensor records the position of the piston (50) and signals it to electronics (54) which control a control valve (19) by means of which the flow direction of the test fluid from the rotary slide valve (26) to the measuring cylinder (49) can be reversed.

4. Device according to one of the Claims 1 to 3, characterized in that the rotary slide valve is designed in such a way that in a certain position, test fluid only flows to one side of the glass tube whereas, from the other side, a corresponding quantity drains via the rotary slide valve to the tank and that in the next position, with the rotary slide rotated by a further 90°, for example, the fluid flows in the opposite direction.

5. Device according to Claim 4, characterized in that two holes (41, 43) extending mutually parallel to one another and two holes (42, 44) also extending parallel to one another and offset by 90° relative to the first holes are formed alternately in the rotary slide (27), via which holes the fluid path leads to the measuring cylinder (49).

6. Device according to one of the Claims 1 to 5, characterized in that the measuring cylinder consists of glass or a transparent plastic.

7. Device according to one of the Claims 1 to 6, characterized in that air bubbles are used as optical indicators in the measuring cylinder (49).

## Revendications

1. Dispositif pour le calibrage de pompes d'injection, dispositif dans lequel la pompe d'injection à contrôler refoule, par l'intermédiaire d'une buse d'injection du liquide de contrôle vers un appareil de contrôle (49), tandis qu'en synchronisme par rapport à la pompe d'injection (13) à contrôler, est entraînée une pompe d'injection (12) calibrée, qui refoule également du liquide de contrôle par l'intermédiaire d'une buse d'injection vers l'appareil de contrôle, dispositif caractérisé en ce qu'entre les buses d'injection (18, 22) et l'appareil de contrôle (49) est disposée une soupape (26) à tiroir rotatif qui tourne avec de fraction de la vitesse de rotation des deux pompes d'injection, et par l'intermédiaire de laquelle, le liquide de contrôle parcourt alternativement deux trajets (17c, 17d; 21c, 21d) respectivement vers les côtés opposés de l'appareil de contrôle (49) revêtant la forme d'un cylindre de mesure, et dans lequel est disposé un piston (50) sollicité par les deux écoulements de liquide de contrôle et susceptible d'être déplacé par eux.

2. Dispositif selon la revendication 1, caractérisé en ce que le tiroir rotatif (27) de la soupape à tiroir rotatif tourne avec une vitesse de rotation moitié de celle des pompes d'injection.

3. Dispositif selon la revendication 1 ou 2, caractérisé en ce qu'il est prévu à chaque extrémité du cylindre de mesure, un détecteur (52, 53) qui détecte la position du piston (50) et qui la signale à une électronique (54), laquelle commande une soupape de commande (19) par l'intermédiaire de laquelle le sens de l'écoulement du liquide de contrôle entre la soupape (26) à tiroir rotatif et le cylindre de mesure (49) est susceptible d'être inversé.

4. Dispositif selon une des revendications 1 à 3, caractérisé en ce que la soupape à tiroir rotatif est constituée de façon que dans une première position déterminée, elle canalise le liquide de contrôle seulement vers un côté du tube en verre, tandis qu'à partir de l'autre côté une quantité de liquide correspondante s'écoule par l'intermédiaire de la soupape à tiroir rotatif vers le réservoir, et que dans la position suivante du tiroir rotatif, décalée par exemple de 90° supplémentaire, le liquide s'écoule dans le sens opposé.

5. Dispositif selon la revendication 4, caractérisé en ce que dans le tiroir rotatif (27) sont ménagés alternativement deux perçages (41, 43) parallèles l'un à l'autre, et, décalés par rapport à eux de 90°, deux autres perçages (42, 44) également parallèles l'un à l'autre, le trajet du liquide vers le cylindre de mesure (49) passant par ces différents perçages.

6. Dispositif selon une des revendications 1 à 5, caractérisé en ce que le cylindre de mesure est en verre ou bien en matière plastique transparente.

7. Dispositif selon une des revendications 1 à 6, caractérisé en ce que dans le cylindre de mesure (49) on utilise des bulles d'air comme indicateurs optiques.